Europäisches Patentamt

European Patent Office

Office européen des brevets

(11) Publication number: **0 490 837 A1**

# (12) EUROPEAN PATENT APPLICATION

(21) Application number: **91830542.6**

(22) Date of filing: **06.12.91**

(51) Int. Cl.5: **A47J 31/46**, A47J 31/057

(30) Priority: **07.12.90 IT 376790**

(43) Date of publication of application:
**17.06.92 Bulletin 92/25**

(84) Designated Contracting States:
**AT BE CH DE DK ES FR GB GR IT LI LU MC NL SE**

(71) Applicant: **COSMEC S.r.l.**
**Via V Alpini, 32**
**I-24059 Urgnano, Bergamo(IT)**

(72) Inventor: **Bazzani, Sauro**
**Via Borgo, 180, Località Bombiana**
**I-40041 Gaggio Montano, Bologna(IT)**

(74) Representative: **Lanzoni, Luciano**
**c/o BUGNION S.p.A. Via dei Mille, 19**
**I-40121 Bologna(IT)**

(54) **A coffee machine for domestic use.**

(57) The coffee machine envisages a projecting element (8) comprising an outlet mouth and sealing and safety means (7), having a through-chamber (9) for the passage of water , and being rotatably connected to an arm and supported by a bracket (11); the projecting element (8) is rotatable on its own vertical axis (Y), with respect to a conduit (4) subsequent to the attachment with subsequent rotation of a container (35), to an extreme open position for the passage of the water from a tower (2) to the outlet mouth (5) and vice-versa; stopping means (10) are envisaged on the projecting element (8) and on the bracket (11) which stopping means (10) act on the said projecting element (8) in such a way as stably to define the two extreme open and closed positions of the conduit (4).

FIG 1

The invention relates to a coffee machine for domestic use.

The prior art embraces various types of coffee machine for exclusively domestic use: the machines comprise a base on which a vertical tower defining a reservoir-sealed boiler stably stands. This tower is equipped, usually inferiorly, with resistance, connectable with a source of electric current with the aim of heating the water present in the reservoir.

On its upper end the tower is connected, by means of mechanical union (for example screws) to a horizontal projecting prolungation, which is defined by at least one conduit to unite the reservoir with an outlet mouth (obviously wider than the conduit) arranged at the free end of the prolungation and inferiorly equipped with a passage filter stably and coaxially fixed on the outlet mouth itself; this outlet mouth is equipped, below and laterally to the filter, with a bayonet joint couple (with a semi-arc conformation) aimed at positioning and stably blocking, after relative rotation, the coffee powder container facing the said outlet mouth and equipped with the usual outlet nozzles of the drink.

At the level of the outlet mouth, for reasons of user safety, an on-off valve is envisaged for the said conduit, which valve is manually commanded by means of a lever or button arranged on the upper part of the outlet mouth.

Coffee machines made in this way have however some drawbacks of a mechanical, sealing and safety nature: the projecting union of the horizontal prolungation with the tower has shown itself to have, over a period of time and use, a certain structural weakness (especially with regard to the mechanical union system), in that the continual attaching-detaching of the coffee container in the outlet mouth provokes a loosening, or even a breaking, of the connection between the prolungation and the tower: this obliges the constructors of such machines to make the conduit in metallic material in order to try to achieve a reasonable duration in terms of time, thus increasing production costs.

The weakness noted above is also present in the on-off valve of the same conduit, which valve can give rise to defects due to its connection with the activation devices arranged internally to the outlet mouth and thus can generate unwanted escape of hot water or steam also at the moment of detachment of the coffee container; furthermore, there is the constant danger, inherent in the manual activation system of the valve, in that the user might forget to close the valve before detaching the coffee container. Thus the above-described system does not constitute a thoroughly defect-free safety solution over a reasonable period of use.

Aim of the present invention is therefore to eliminate the above-described drawbacks by providing a domestic coffee machine which is solid, compact, practical in its constituent parts, and functionally safe.

The invention, as characterised in the claims which follow, attains the above-described aims by providing a coffee-machine equipped with a projecting element comprising an outlet mouth and sealed safety means, having a through-chamber for water; which projecting element is rotatably connected with an arm and supported by a bracket; the projecting element is slidably rotatable on its own vertical axis with respect to a conduit after the attachment with subsequent rotation of a container, in an extreme position corresponding to the open position of the water passage from a tower to an outlet mouth and vice-versa; stopping means are envisaged on the projecting element and on the bracket, which stopping means act on the said projecting element in such a way as stably to define the two extreme open and closed positions of the conduit.

The advantages and characteristics of the invention will better emerge from the detailed description which follows, made with reference to the accompanying drawings, illustrating an embodiment which is purely in the form of a non-limiting example, in which:

- Figure 1 shows a lateral view, with some parts removed in order better to evidence others, of the coffee machine object of the present invention;
- Figure 2 shows, in a view from above, the coffee machine of figure 1 with some parts removed better to evidence others;
- Figure 3 shows, in side-view and with some parts removed in order better to evidence others, a constructive variant of one part of the coffee machine of figure 1;
- Figures 3a and 3b show, both in side-view with some parts removed better to evidence others, a particular of figure 3 in two different operative positions;
- Figure 4 shows, in side view and with some parts removed better to evidence others, another constructive variant of a part of the coffee machine of figure 1;
- Figure 5 shows, in side view and with some parts removed in order better to evidence others, a further variant of a part the coffee machine of figure 1;
- Figures 6 and 6a show, in side view and with some parts removed in order better to evidence others, and in a view from above, another variant of a part of the coffee machine of figure 1;
- Figures 7 and 8 show, both in longitudinal section, a secondary conduit of the coffee machine, equipped with closing means for the said conduit.

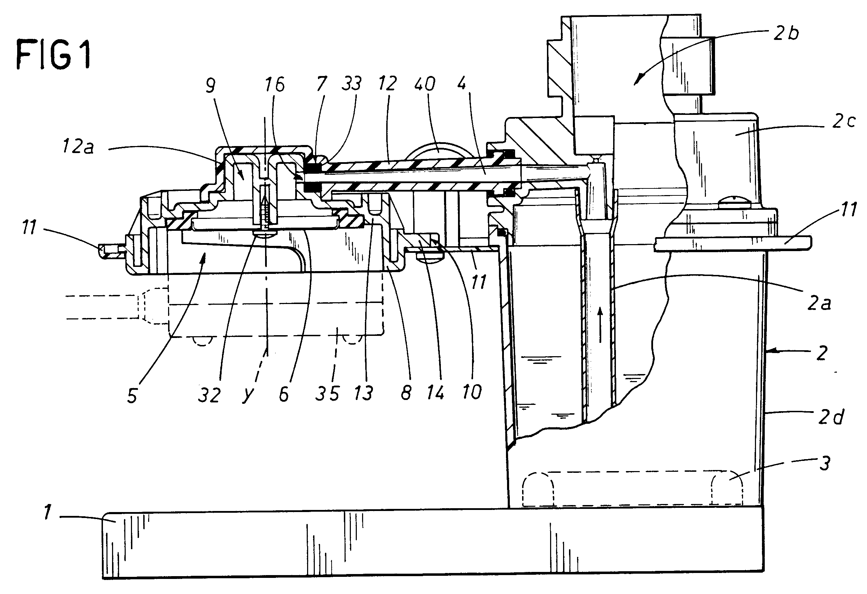

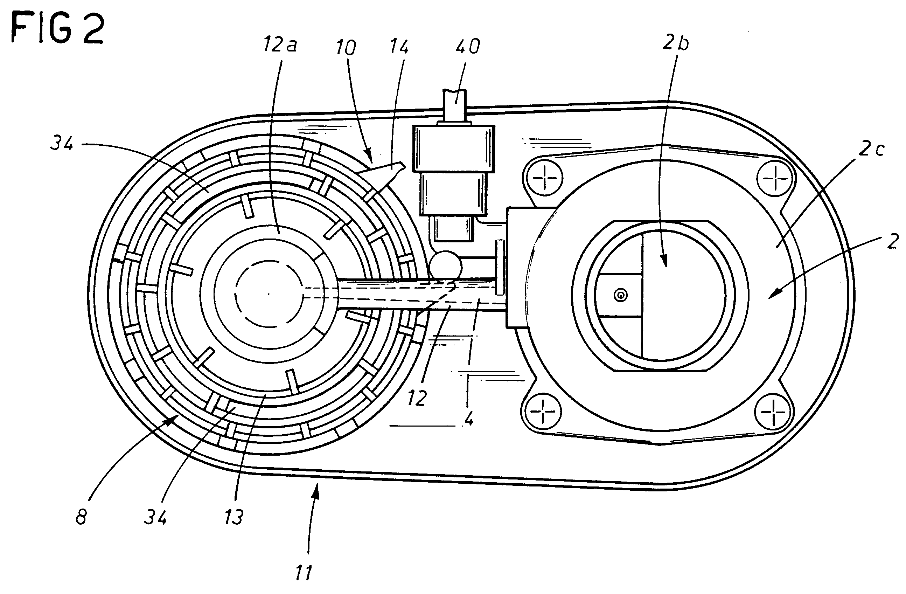

With reference to the drawings, the coffee machine comprises a base 1 of support of a vertical tower 2, which tower 2 is arranged on one side of the said base 1, and which tower 2 defines a sealed container-boiler for water (see figure 1). The tower 2 has a sealedly closable inlet opening 2b and is equipped with heating means 3 acting on the said tower 2 in such a way as to permit of increasing the temperature of the water up to its vaporising (as can be seen in figures 1 and 2 these means are constituted by an electric resistance arranged around the bottom of the tower 2 and connectable to a normal electric wall switch).

The tower 2, in the illustrated case has two distinct semi-parts, indicated by 2c and 2d (of which the semi-part 2c defines the upper part) and said tower 2 is connected horizontally by means of an arm 12 equipped with a conduit 4 to a circular water outlet mouth 5, arranged facing and directly above the other side of the base 1, which mouth 5 is equipped with a filter 6 for the passage of the water, which filter 6 is fixed coaxially on the said outlet mouth 5; in the figures a secondary lateral conduit 40 is also illustrated, usable for the vaporised water. A coffee-powder container 35 (illustrated schematically by a discontinuous line in figure 1), equipped with a relative handle and erogation spout, is connectable to the said outlet mouth 5, by means of a bayonet joint couple 34 in rotation about a vertical axis Y parallel to the tower 2.

The conduit 4 is equipped with safety and sealing means 7 acting on the said conduit 4 and aimed at permitting of opening and respectively closing the pressurised water passage from the tower 2, which tower 2 is obviously internally equipped with a water aspirating conduit 2a, coaxial to the conduit 4 and sealedly connected to the outlet mouth 5.

The tower 2 envisages a circular projecting element 8, comprising the outlet mouth 5 and the safety means 7, and has a through-chamber 9 for the water which chamber 9 is rotatable on its own vertical axis Y with respect to the conduit 4 between two extreme positions corresponding to the open position for the water passage from the tower 2 to the outlet mouth 5 and the closed position for the passage of the water from the tower 2 to the outlet mouth 5; this is subsequent to the attachment with subsequent rotation of the container 35 and vice-versa. More precisely, the projecting element 8 is supported by a bracket 11 united with the tower 2 (see figures 1 and 2); the said bracket 11 is in fact a flat single-body plate interplaced between the two semi-parts 2c and 2d which constitute the tower 2 and arranged inferiorly to the horizontal arm 12, which arm 12 rotatably houses the through-chamber 9 of the projecting element 8 internally to a cup-shaped housing 12a, and which arm 12 is connected to the said housing 12a by means of a central screw 32 which permits of the rotation of the said projecting element 8.

The projecting element 8 is constituted by a principal body 13 having an upturned cup-shape defining the above-mentioned outlet mouth 5 and, superiorly, a couple of through-chambers 9 of which one defines a part of, or in any case the housing of, the safety means 7 (which means will be described more amply below).

Stopping means 10 are also envisaged, arranged on and acting on the said projecting element 8, in such a way as to define stably the two extreme open and closed positions with respect to the water passage; these stopping means 10 comprise, in the specific case now described, a couple of fins 14 radially arranged on the external surface of the projecting element 8 in the zone facing the tower 2 and which fins' 14 aim is to position stably the said projecting element 8 in the extreme open and closed positions by means of acting on a pivot 15, constituted by a screw vertically screwably fixed on the said bracket 11.

In figure 1 a first solution is illustrated of the above-mentioned safety means 7, which means 7 comprise a hole 16 bored radially on the external surface of the projecting element 8 and connecting, coaxially and sealedly (in fact a gasket 33 is envisaged, interpositioned between the conduit 4 and the hole 18), the through-chamber 9 with the conduit 4 on the passage, in rotation, of the projecting element from the above-mentioned closed position to the open position.

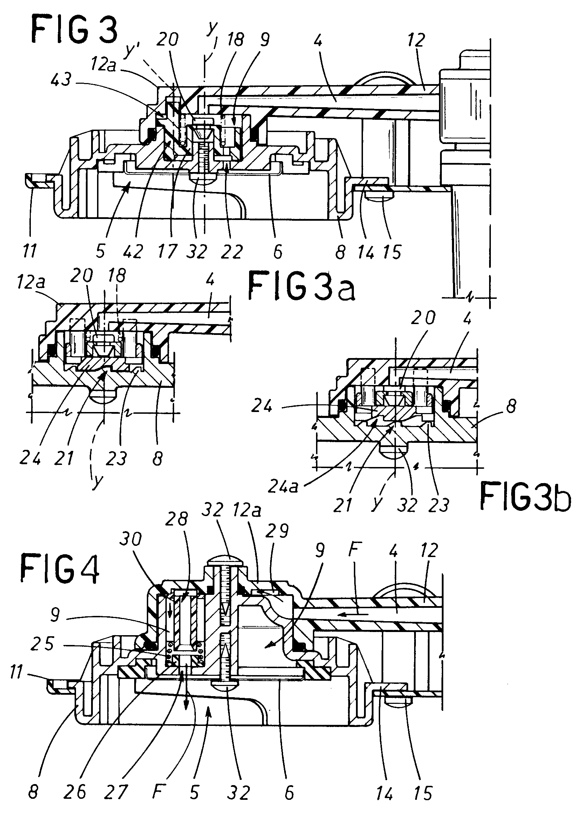

In figures 3, 3a and 3b, a variant of the safety means 7 is illustrated, which means 7 comprise a vertically mobile gate valve 17, housed centrally internally to the through-chamber 9 and interpositioned between the conduit 4, which conduit 4 is in this variant vertically positioned above the said through-chamber 9, and the outlet mouth 5; the gate valve 17 is centrally equipped with a mushroom-shaped closing and sealing gasket or head 20 for the conduit 4 and is mobile, by means of cam means 21 acting in rotation between an extreme raised closed position of the conduit 4 (see figure 3b), in which the head 20 is in contact with the outlet end of the conduit 4, and an extreme lowered open position of the conduit 4 (see figures 3 and 3a), in which the head is at a distance from the outlet end of the conduit 4 in such a way as to permit of the water's passage through the outlet mouth 5 connected to the through-chamber 9 and through second vertical conduits 22 and 22a, realised on the projecting element 8 and respectively on the gate valve 17.

Spring means 18 (in the example a real spring) are also envisaged, which are interplaced between the gate valve 17 and the cup-shaped housing 12a so as to permit of stable contact of the said gate-valve 17 with the projecting element 8 at the passage between the two extreme positions.

As can be seen in figures 3a and 3b, the cam means 21 comprise a series of teeth 23 shaped on the lower circumference of the projecting element 8 and solid in rotation with said projecting element 8, and in contact with a corresponding surface 24, defining the lower base of the gate valve 17, and having complementary equidistant housings 24a for corresponding teeth 23 in such a way as to define the extreme lowered open position. The gate valve 17 and the arm 12 are also equipped (see figure 3) with relative coupling means 41, slidable along vertical axis Y parallel to the central rotation axis of the projecting element 8, which coupling means 41 comprise a pivot 42 on the gate valve 17 and slidably housed in a corresponding housing 43 realised on the arm 12 in such a way as to prevent relative rotation between the said gate valve 17 and the projecting element 8.

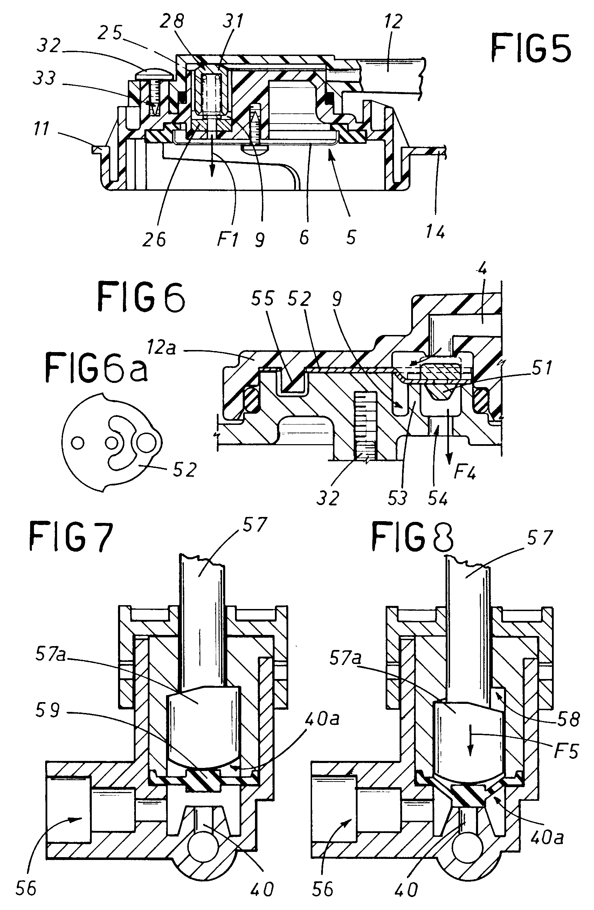

In a further alternative solution, illustrated in figures 4 and 5, the safety means 7 are constituted by a third conduit 27 realised on the projecting element 8 and defining a connection between the through-chamber 9 and the outlet mouth 5, which third conduit 27 has, at the level of the through-chamber 9 a gasket 26 on which a closing pivot 28 acts, which pivot 28 is subject, in opening, to a spring 25; second cam means 29 are also envisaged interplaced between the cup-shaped housing 12a and the pivot 28, said means 29 acting on the said pivot 28 and being aimed at permitting a movement of the said pivot between an extreme lowered closed position of the third conduit 27 (and thus also of the conduit 4), in which the pivot 28 is against the gasket 26, and an extreme raised open position of the said third conduit 27, in which the pivot 28 is distanced from the gasket 26, and consequently realises a connection, without continuity, between the conduit 4 (defined in part also by the opening made by the cup-shaped housing 12a), the through-chamber 9, the third conduit 27 and the outlet mouth 5 (see arrow F in figure 4 and arrow F1 of figure 5).

The vertical pivot 28, in the solution illustrated in figure 4, is constituted by a cylinders 30 interpositioned between the gasket 26 and the cup-shaped housing 12, and has an external circumferential projection 30a which retains the spring 25; the cylinder 30 is moved, by means of compression, between the above-described two extreme positions by means of a groove realised in the cup-shaped housing 12, constituting the second cam means 29, during the rotation of the projecting element 8 between the two extreme positions.

In the solution illustrated in figure 5, the vertical pivot 28 is constituted by a cylindrical element 31 which, as before, is interpositioned between the gasket 26 and the cup-shaped housing 12, but has an internal housing 31a for the spring 25; also in this case the cylindrical element 31 is moved by means of compression, between the two extreme positions by a groove realised on the cup-shaped housing 12a, defining the above-decribed second cam means 29 during the rotation of the projecting element 8; in this case, differently to the previous ones, the screw 32 for uniting the bracket 11 to the projecting element 8 is arranged non-axially with respect to the previous variants, and thus it is necessary to equip the bracket 11 with a groove 33 so as to permit of the rotation of the projecting element 8.

In figure 6 another alternative solution is illustrated for the safety means 7, in which the conduit 4 exits above the through-chamber 9, which is equipped with a mushroom open-close valve 51 for the above-described conduit 4, which valve 51 is constrained to an elastically deformable ring 52 (see figure 6a) and is stably interplaced between the projecting element 8 and the cup-shaped housing 12a. Third frontal cam means 53 are envisaged internally to the through-chamber 9, which cam means 53, together with the ring 52, on rotation of the projecting element 8 between the two extreme positions, permit of a sliding of the mushroom valve 51 between a raised closed position of the conduit 4 (visible in figure 6 as a broken line) and a lowered open position of the conduit 4.

Below the mushroom valve 51 and the ring 52 a conduit 54 is envisaged, realised on the through-chamber 9, which conduit 54 connects the said through-chamber 9 to the outlet mouth 5 so as to permit the water to flow towards the container 35 (see arrow F4 in figure 6); the ring 52 is stabilised in its position by a vertical pivot 55 projecting downwards towards the bottom of the cup-shaped housing 12a and couplable within a corresponding seating realised on the said ring 52.

Further to improve the overall safety of the coffee machine, a safety means is envisaged also on the secondary conduit 40: as can be seen in figures 7 and 8, the connection between the tower 2 outlet conduit 40 and a conduit 56 exiting to the outside can be closed by means of a lever 57 wihich exits from the corresponding arm 58 which arm 58 closes the secondary conduit 40. This lever 57 is rotatable on its longitudinal axis and is housed, with an enlargement 57a at its end, internally to the said secondary conduit 40 which conduit 40 has a corresponding housing 40a; a frontal cam 58, realised in the same seating 40a acts on the enlargement 57a, in such a way as to permit of the sliding of the said enlargement 57a in the direction indicated by arrow F5, previous to externally manually rotating, and consequently of acting on an elastically deformable sealing membrane 59, which is stably interpositioned between the enlargement 57a and the conduit 40 and can move from a rest position (visible in figure 7), in which the membrane 59 is distanced from the outlet end of the secondary conduit 40 and thus permits the flow of water in the outlet conduit 56, to an operative position, in which the membrane 59 is against the outlet end (see figure 7) of the secondary conduit 40 and thus closes the flow of water towards the outlet conduit 56.

Thus a coffee machine made in this way permits of considerable functioning safety, in that the user, in the moment when he or she applies the powdered coffee container 35 and turns it to attach it to the outlet mouth 5 equipped with the bayonet joint couple 34 for the joining of the said coffee container 35, automatically rotates the projecting element 8 and, consequently, permits the connection of the through-chamber 9 with the water inlet conduit 4 thanks to the contemporaneous movement of the said safety means 7. Correspondingly, at the moment of detadchment of the container 35 from the outlet mouth 5, the safety means 7 close water access to the through-chamber 9 (again thanks to the rotation of the projecting element 8); this brings about a constant safety of the machine for the user. Obviously the rotation of the projecting element 8 is less than that of the container 35 to permit of the stable blocking of the said container in the bayonet joints 34.

The bracket 11 and the arm 12 also enable the conduit 4 to be made in less expensive material than in the previous solutions, in that the attachment force of the container 35 in the outlet mouth 5 is directly absorbed by the bracket 11 and the arm 12 which form a single compact body, solid and safe over a long period of time.

**Claims**

1. A coffee machine for domestic use comprising a support base (1) for a vertical tower (2) which tower (2) is arranged on one side of the said base (1), and which tower (2) comprises a container-boiler for water, and has superiorly a sealedly closable inlet opening (2b); said vertical tower (2) being equipped with means for heating (3) acting on it so as to permit of increasing the temperature of the said water up to its vaporisation internally to the said tower (2); said tower (2) is connected by means of at least one horizontal arm (12) equipped with a relative conduit (4), to an outlet mouth (5) for the said water, arranged facing and above the other side of the said base (1) and being equipped with a filter (6) for the passage of the said water, which filter (6) is fixed coaxially on the said outlet mouth (5), said mouth (5) having rotatably connectable to it by means of a bayonet joint pair around a vertical axis (V) parallel to the said tower (2), a coffee powder container (35) equipped with a relative handle and spout; said conduit (4) being equipped with safety means (7) acting on the said conduit (4) and aimed at permitting of opening and closing the passage of the said pressurised water from the said tower (2) to the said outlet mouth (5); wherein a projecting element (8) is envisaged, comprising at least the said outlet mouth (5) and the said safety means (7), being rotatably connected with the said arm (12) and supported by a bracket (11) which bracket (11) is solidly connected to the said tower (2); said projecting element (8) having at least one through-chamber (9) for the said water, which through-chamber (9) is rotatable about its own vertical axis (V) with respect to the said conduit (4), and subsequent to the connection with subsequent rotation of the said container (35), in one extreme position corresponding to the open position for the passage of the said water from the said tower (2) to the said outlet mouth (5) and vice-versa; stopping means (10) being envisaged on the said projecting element (8) and on the said bracket (11) and acting on the said projecting element (8) in such a way as stably to define the said two extreme open and closed positions.

2. A machine as in claim 1, wherein said projecting element (8) is rotatably housed, together with at least the said through-chamber (9), internally to a cup-shaped housing (12a) on the said arm (12), which arm (12) is arranged above the said bracket (11) and connected to the said tower (2).

3. A machine as in claim 1, wherein said projecting element (8) comprises a principal body (13) having an upturned cup-shape defining the said outlet mouth (5) and having superiorly the said through-chamber (9) defining part of the said safety means (7).

4. A machine as in claim 1, wherein the said stopping means (10) comprise a couple of fins (14) projecting radially from the external surface of the said projecting element (8) in the zone facing the said tower (2), which fins (14) are aimed at stably positioning the said projecting element (8) in the said extreme open and closed positions by coming into contact with a vertical pivot (15) fixed on the said connecting bracket (11) of the said projecting element (8) with the said tower (2).

5. A machine as in claim 1, wherein the said safety means (7) comprise a radial hole (16) bored into the external surface of the said projecting element (8) and connecting sealedly coaxially the said through-chamber (9) with the said conduit (4) during the rotating passage of the said projecting element (8) from the said closed position to the said open position.

6. A machine as in claim 1, wherein the said safety means (7) comprise a vertically mobile gate valve (17), housed centrally internally to the said through-chamber (9), and interplaced between the said conduit (4), said gate valve (17) projecting vertically above the said through-chamber (9) and the said outlet mouth (5); the said gate valve (17) being equipped, virtually centrally, with a head (20) for the sealed closing of said conduit (4), which head (20) is mobile, by means of cam means (21) acting rotatingly between the said gate valve (17) and the said projecting element (8), between an extreme raised closed position, in which the said head (20) is in contact with the end of the said conduit (4), and an extreme lowered open position of the said conduit (4), in which the said head (20) is distanced from the outlet end of the said conduit (4), in such a way as to permit of the passage of the water through the said outlet mouth (5) connected to the said through-chamber (9) through second vertical conduits (22, 22a) realised on the said projecting element (8) and respectively on the said gate valve (17); spring means (18) being envisaged, interplaced between the said gate-valve (17) and the said arm (12).

7. A machine as in claim 6, wherein the said cam means (21) comprise a series of teeth (22) shaped in the lower circumference of the said projecting element (8) and solid in rotation with the said projecting element (8), and in contact with a corresponding surface (24), defined by the lower base of the said gate valve (17), having complementary equidistanced seatings (24a) for the housing of corresponding teeth (23) so as to define the extreme lowered open position; said gate valve (17) and said arm (12) being equipped with relative coupling means (41) slidable along a vertical axis (V1) parallel to the central rotation axis, which coupling means (41) prevent relative rotation between the said gate valve (17) and the said projecting element (8).

8. A machine as in claim 1, wherein the said safety means (7) comprise a third conduit (27) realised in the said projecting element (8) and being a connection between the said through-chamber (9) and the said outlet mouth (5); the said third conduit (27) having, at its end in contact with the through-chamber (9), a gasket (26) on which a closing pivot (28) acts, which closing pivot (28) is subject, on opening, to a spring (25); second cam means (29) being envisaged, interplaced between the said arm (12) and the said closing pivot (28), aimed at permitting of movement of the closing pivot (28) between an extreme lowered closed position of the said third conduit (27), in which position the said closing pivot (28) is against the said gasket (26) and an extreme raised open position of the said third conduit (27), in which the said closing pivot (28) is distanced from the said gasket (26) and there is connection between said conduit (4), said third conduit (27) and said outlet mouth (5).

9. A machine as in claim 8, wherein said vertical pivot (28) comprises a cylinder (30) interpositioned between the said gasket (26) and the said arm (12) and has an external circumferential projection (30a) for retaining the said spring (25); the said cylinder (30) being moved, by means of compression, between the said two extreme positions by a groove realised in the said arm (12), defining the said second cam means (29) on rotation of the said projecting element (8).

10. A machine as in claim 8, wherein the said vertical pivot (28) comprises a cylindrical element (31) interpositioned between the said gasket (26) and the said arm (12) and having an internal housing (31a) for the housing of the said spring (25); the said cylindrical element (31) being moved, by means of compression, between the said two extreme positions by a grooved channel (29) realsised on the said arm (12), defining the second cam means (29) on rotation of the said projecting element (8).

11. A machine as in claim 1, wherein the said safety means (7) comprise a mushroom-shaped opening and closing valve (51) of the said conduit (4), housed internally to the said through-chamber (9), and constrained by an elastically deformable ring (52) stably interpositioned between the said projecting element (8) and the said arm (12); third, frontal cam means (53) being envisaged, arranged internally to the said through-chamber (9), on which through-chamber (9) a connecting conduit (54) with the said outlet mouth (5) is realised, said cam means (53) being aimed at permitting, co-operatingly with the said ring (52), and on rotation of the said projecting element (8) between the two extreme positions, a sliding of the said mushroom-shaped valve (51), between a raised closed position against the said conduit (4) and a lowered open position of the the same conduit (4), so as to permit the inlet of water internally to the said conduit (54).

12. A machine as in claim 1, wherein said tower (2) is made in two semi-parts (2c, 2d) coaxially connected and united with said bracket (11) interplaced between the two said semiparts (2c, 2d) and comprising a flat plate.

FIG 1

EP 0 490 837 A1

FIG 2

EP 0 490 837 A1

FIG 3

FIG 3a

FIG 3b

FIG 4

FIG5

FIG6

FIG6a

FIG7

FIG8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 833 978 (MARTONE L.C.)<br>* column 4, line 17 - column 5, line 21; figures 1-13 * | 1-4 | A47J31/46<br>A47J31/057 |
| A | US-A-3 405 630 (WEBER R.L.)<br>* column 3, line 10 - column 6, line 56; figures 1-4 * | 1,2,4 | |
| A | US-A-3 094 145 (CHERNAK J.)<br>* column 2, line 14 - column 4, line 49; figures 1-4 * | 6 | |
| A | US-A-2 451 195 (BROWN W.F.)<br>* column 4, line 18 - column 8, line 73; figures 1-13 * | 6,7 | |
| A | EP-A-0 339 292 (RANCILIO MACCHINE PER CAFFE S.P.A.) | | |

TECHNICAL FIELDS SEARCHED (Int. Cl.5 )

A47J

The present search report has been drawn up for all claims

| Place of search | Date of completion of the search | Examiner |
|---|---|---|
| THE HAGUE | 20 MARCH 1992 | ELSWORTH D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)